# EUROPEAN PATENT APPLICATION

(11) **EP 4 851 094 A1**
(43) Date of publication of application: **09.12.2026**
(21) Application number: 25305810.1
(22) Date of filing: 04.06.2025
(51) Int. Cl.: B66C 13/06, G05D 19/02

(54) **METHOD AND SYSTEM FOR SEAMLESS CONTROL MODE TRANSITION IN OSCILLATING SYSTEMS USING TIME DELAY CONTROL**

(71) Applicant: Schneider Toshiba Inverter Europe SAS, 27120 Pacy-sur-Eure (FR)
(72) Inventor: CATALANO, Saverio, 27000 EVREUX (FR); FRAPPÉ, Emmanuel, 92100 BOULOGNE (FR)
(74) Representative: Plasseraud IP

(57) **Abstract**

This invention presents a method for controlling an oscillating system capable of operating in both torque and speed control modes. The speed control mode utilizes a Time Delay Control (TDC) strategy, defined by its transfer function and parameters, to mitigate oscillations. The core of the method involves operating the system in torque control mode (S1). During this phase, the system continuously or intermittently obtains (S2) the actuator's current speed (*ωₑₛₜ*)*.* A reconstructed reference speed (*ω_{rec}*) is then calculated (S3). This *ω_{rec}* is determined such that if it were fed into the TDC transfer function, the output would match the observed *ωₑₛₜ.* This essentially anticipates the TDC's required input based on the actual speed under torque control. When a transition to speed control mode is initiated (S4), the TDC strategy is initialized (S5) using this calculated *ω_{rec},* or a value derived from it, as its initial reference speed. This intelligent initialization ensures a seamless transition between the control modes, preventing the induction of new oscillations and enabling the damping of any pre-existing oscillations in the system, thereby enhancing stability and performance.

## Description

### Technical Field

The present invention relates to methods and systems for controlling oscillating mechanical systems, such as cranes, robotic arms, or other pendulum-like structures. More particularly, the invention pertains to a method for seamlessly transitioning between a torque control mode and a speed control mode, wherein the speed control mode utilizes a Time Delay Control (TDC) strategy to mitigate system oscillations.

### Prior art

Controlling oscillating mechanical systems presents significant challenges, particularly when aiming for both responsive dynamic performance and precise, stable motion. Such systems, often characterized by inherent elasticity and significant inertia (e.g., a crane with a long, flexible boom up to 120 meters, or a load suspended from a trolley), exhibit natural resonant frequencies that can be easily excited by control actions.

Two primary control modes are commonly employed: torque control and speed control.

Torque control mode offers direct management of the system's dynamics by directly commanding the motor torque. This can provide a highly responsive feel, which is often preferred by operators in applications requiring rapid reactions, for instance, in European crane markets. However, precise speed regulation is difficult to achieve in pure torque control, as the actual speed depends on the load and system dynamics. Furthermore, when torque commands are changed or removed (e.g., during deceleration or stopping), the stored elastic energy in the system can be released, leading to residual oscillations. Stopping a system under torque control by simply removing torque can also result in excessively long coasting times (e.g., up to 40 seconds in some examples) if active braking is not precisely managed.

Conversely, speed control mode allows for the precise attainment and maintenance of desired operational speeds, a characteristic often favored in markets requiring guaranteed operational parameters (e.g., Asian crane markets demanding a precise speed like 5 Hertz). However, directly applying speed commands, especially aggressive ones, to an oscillating system can excite its natural resonant frequencies, leading to undesirable oscillations. To mitigate such oscillations in speed control, techniques such as Time Delay Control (TDC), also known in some literature as "POSICAST" control, have been developed. TDC typically modifies the speed reference signal fed to the speed loop, often by combining the original reference with a time-delayed version of itself. The time delay (*τ*) is usually related to the system's natural oscillation period (e.g., half the period), and a weighting factor (*α*) determines the shaping of the modified reference to cancel or damp the oscillations. While effective at damping oscillations once the system is operating under speed control, TDC inherently relies on a defined speed reference. Moreover, the shaping of the reference by TDC can sometimes lead to a perception of sluggishness in the system's initial response, affecting the user experience, even if the total acceleration time might be shorter. Indeed, such a perception of a less direct response can be generally characteristic of speed control modes when compared to torque control modes, as the latter more directly influences the system dynamics. This can impact user experience, irrespective of potential gains in overall acceleration time.

A significant challenge arises when attempting to combine the benefits of both torque control (e.g., responsiveness during acceleration or dynamic maneuvers) and TDC-enhanced speed control (e.g., precision and oscillation damping for steady-state operation or controlled deceleration). The transition between these modes is critical. An abrupt or uncoordinated switch can induce new, significant oscillations in the system, cause mechanical jerks or steps in speed if the initial conditions for the TDC are not properly set relative to the system's actual state, or fail to compensate for pre-existing oscillations or tensions already present in the system, for example, from prior torque control actions where elastic energy might have been stored.

Existing TDC strategies are conventionally applied when the system is already operating under speed control and are not inherently designed to manage the complexities of a transition from a torque control regime, where the speed reference for the TDC is not directly available or actively used.

Therefore, there is a need for an improved method that enables a smooth, stable, and seamless transition from a torque control mode to a TDC-based speed control mode in oscillating systems, ensuring that system stability is maintained, new oscillations are not induced, and any pre-existing or transition-induced oscillations are effectively managed and damped.

### Summary

To this aim, the present document concerns a method for controlling an oscillating system, for example a motor connected to an oscillating plant, the system being operable in a torque control mode and a speed control mode, wherein the speed control mode utilizes a Time Delay Control or TDC strategy characterized by a TDC transfer function and TDC parameters, the method comprising the steps of:
- operating the system in the torque control mode;
- during operation in the torque control mode, continuously or intermittently:
   -- obtaining a measured or estimated actuator speed (*ωₑₛₜ*) of the system;
   -- calculating a reconstructed reference speed (*ω_{rec}*) based on said measured or estimated actuator speed (*ωₑₛₜ*) and said TDC parameters, wherein the reconstructed reference speed is determined such that if the reconstructed reference speed (*ω_{rec}*) were applied as an input to the TDC transfer function, the output would substantially correspond to the measured or estimated actuator speed (*ωₑₛₜ*);
   -- transitioning from the torque control mode to the speed control mode; and
   -- upon said transitioning, initializing the TDC strategy in the speed control mode by using said calculated reconstructed reference speed (*ω_{rec}*), or a value derived therefrom, as an initial reference speed input to the TDC strategy, thereby enabling a seamless transition between control modes and/or damping oscillations in the system.

The term "oscillating system" refers to any mechanical or electromechanical system that, owing to its inertia, elasticity (e.g., the flexibility of a crane boom, a robotic arm, or the pendulum-like nature of a suspended load), or other dynamic characteristics, has a natural tendency to exhibit undesirable vibratory or oscillatory movements about an equilibrium position or trajectory when subjected to commands or disturbances. Typical examples include cranes, robotic manipulators, positioning systems with flexible linkages, or vehicles with suspended loads.

It is to be understood that the "oscillating system" as described herein is a tangible, physical apparatus or assembly existing in the real world, and not merely an abstract model or a simulation executed solely within a computational environment. The invention pertains to the control of actual, corporeal systems that exhibit physical oscillations due to their inherent material properties, mechanical construction, and interaction with physical forces. Examples such as cranes with multi-meter long steel booms that physically flex, robotic arms with joints and linkages possessing real mass and elasticity, or vehicles transporting physically suspended loads, all underscore the concrete, physical nature of the systems to which the present control method is applied. The control actions described, such as applying torque via a motor or measuring the speed of an actuator, are performed on and within these real-world physical systems, and the resulting oscillations are observable physical phenomena. The technical problem addressed by the invention is therefore rooted in the challenge of managing the dynamic behavior of these physical entities, and the solution provides a technical effect in the improved physical operation of these systems, such as reduced physical vibrations and smoother physical motion during control mode transitions.

The expression "controlling an oscillating system" refers to the application of control strategies and algorithms to direct the motion (e.g., speed, position, torque) of an oscillating system to achieve desired performance objectives, while simultaneously striving to minimize, damp, or eliminate the inherent undesirable oscillations of the system.

The term "torque control mode" refers to an operational mode of the control system wherein the primary control variable is the torque (or effort) applied by an actuator (e.g., an electric motor). In this mode, the controller aims to deliver a specific torque, allowing for a potentially rapid dynamic response, but where the resulting speed or position is not directly regulated and may vary depending on the load and system dynamics.

The term "speed control mode" refers to an operational mode of the control system wherein the primary control variable is the speed of the actuator or a relevant part of the system. The controller endeavors to maintain the system's speed at a specified setpoint, typically by adjusting the actuator's torque, irrespective of load variations.

The expression "Time Delay Control (TDC) strategy" refers to a feedforward prefiltering control technique, also known in some contexts by names such as "Posicast" or "Input Shaping." It aims to reduce oscillations in a system by modifying the command setpoint (typically the speed setpoint) before it is applied to the system. This modification generally involves combining the original setpoint signal with one or more delayed and weighted versions of the same signal, with the delays and weightings chosen to counteract the oscillatory modes of the system.

The term "TDC transfer function" refers to the mathematical representation, typically in the Laplace (frequency) domain, that describes how the TDC strategy transforms an input setpoint (e.g., *ω_{ref}*(*s*)) into a modified output setpoint (e.g., *ω_{TDC}*(*s*)). A typical form is *TDC*(*s*) = (1 *- α*) *+ α* * *e*^{-*sτ*}, wherein:
- *TDC*(*s*) is the transfer function itself, representing the ratio $\frac{{ω}_{TDC \left(s\right)}}{{ω}_{ref \left(s\right)}}$.
- *s* is the complex frequency variable used in the Laplace transform.
- *α* is a dimensionless TDC parameter, typically a weighting or damping factor that determines the relative contribution of the undelayed and delayed portions of the input signal to the output signal.
- *e* is the base of the natural logarithm (Euler's number), a mathematical constant.
- *τ* is a TDC parameter representing the specific time delay, in units of time (e.g., seconds), applied to a portion of the input signal. This parameter is typically related to the natural oscillation period of the system.
- The term *e*^{-*sτ*} represents the Laplace transform of a pure time delay of *τ* time units.

The term "TDC parameters" refers to the specific coefficients that define the behavior of the TDC transfer function for a given system. The primary parameters typically include *α*, a weighting or damping factor related to the distribution of energy between the direct and delayed setpoint components, and *τ*, the time delay applied to a portion of the setpoint signal, generally related to the natural oscillation period of the system.

The phrase "continuously or intermittently" refers to the frequency at which certain actions, such as obtaining the actuator speed and calculating the reconstructed reference speed, are performed. "Continuously" implies that these actions are carried out at every control cycle or in a quasi-instantaneous manner. "Intermittently" signifies that they are performed at discrete intervals, although for the efficacy of the present invention, frequent execution approaching continuity is preferable during the torque control mode.

The term "measured or estimated actuator speed (*ωₑₛₜ*)" refers to the current angular or linear velocity of the system's main actuator (e.g., the motor) or a relevant part of the oscillating system. This speed can be obtained directly via a speed sensor (measured) or calculated via an estimation algorithm or state observer based on other available signals (estimated).

The term "reconstructed reference speed (*ω_{rec}*)" refers to a fictitious or virtual setpoint speed that is calculated while the system is operating in torque control mode. It represents the reference speed that *would have had to be applied* as an input to the TDC transfer function for the output of that TDC transfer function to correspond to the currently measured or estimated actuator speed (*ωₑₛₜ*). This calculation is essentially an inversion of the TDC function with respect to *ωₑₛₜ.*

The phrase "transitioning from the torque control mode to the speed control mode" refers to the act of switching the system's dominant control strategy from one based on torque to one based on speed.

The expression "initializing the TDC strategy" refers to the process of setting up the initial state of the TDC strategy (e.g., initial values in its delay buffers, its initial input setpoint) at the precise moment the system switches to speed control mode.

The phrase "value derived from said calculated reconstructed reference speed" indicates that the reconstructed reference speed (*ω_{rec}*) may not be used directly as the sole initial setpoint for the TDC, but rather can serve as the basis for determining the correct initial state of the TDC. For instance, *ω_{rec}* can be used to populate the internal delay buffers of the TDC or to calculate an initial setpoint that accounts for the recent history implicit in *ω_{rec}*, thereby ensuring continuity of the TDC's processing.

The expression "enabling a seamless transition between control modes" refers to ensuring that the switch from one control mode to another occurs smoothly, without introducing shocks, jerks, noticeable discontinuities in the system's motion, or exacerbating or generating new oscillations.

The expression "damping oscillations in the system" refers to actively reducing the amplitude of existing or potential vibrations or oscillations within the system, leading to a more stable and precise motion.

The operational sequence of such method provides for continuity when switching from torque control to TDC-based speed control. This continuity mitigates the generation of abrupt command changes or significant oscillations that could otherwise arise during such transitions in oscillating systems.

Furthermore, the initialization of the TDC strategy based on the system's state immediately prior to the transition allows the TDC to address pre-existing oscillations from the moment the speed control mode is engaged. This contributes to the overall stability of the system throughout and following the control mode change.

The method enables the distinct operational characteristics of torque control, such as responsiveness, to be utilized during certain phases, and the characteristics of TDC-enhanced speed control, such as precise speed regulation with oscillation damping, to be utilized during other phases. The ability to transition effectively between these modes offers increased operational versatility for the control of oscillating systems.

The smoother operation and improved stability resulting from this method can lead to reduced mechanical stress on system components and more predictable system behavior. This can contribute to enhanced precision in applications where oscillating systems are employed.

The step of calculating the reconstructed reference speed (*ω_{rec}*) may further comprise:
- calculating a delayed speed (*ω_{delayed}*) representing the reconstructed reference speed (*ω_{rec}*) subjected to a delay, and determining the reconstructed reference speed (*ω_{rec}*) according to a formula that inverts the TDC transfer function, for example as ${ω}_{rec} = \frac{{ω}_{est} - \left(α∗{ω}_{delayed}\right)}{\left(1-α\right)}$ where *α* is a TDC ratio or dampening factor.

The term "delayed speed (*ω_{delayed}*)" refers to a signal representing the reconstructed reference speed (*ω_{rec}*) after it has been subjected to a specific time delay, typically corresponding to the delay *τ* used within the Time Delay Control (TDC) strategy. This *ω_{delayed}* is an internal variable used in the calculation of *ω_{rec}* itself when the full TDC dynamics, including its delayed component, are considered.

The term "*α*" or "TDC ratio or dampening factor" refers to a dimensionless TDC parameter, typically ranging between 0 and 1, that dictates the relative weighting between the direct (undelayed) component and the delayed component of the reference signal within the Time Delay Control (TDC) strategy. Its value is important for shaping the TDC's response and is often selected based on the known or estimated damping characteristics of the oscillating system itself, with the objective of achieving effective oscillation cancellation or damping. For instance, in some TDC formulations, an *α* value of 0.5 might be used for systems with negligible inherent damping, while values closer to 0 might be used for systems with higher inherent damping, or to achieve a more aggressive damping effect from the TDC. The precise value of *α* is a TDC parameter used in both the operation of the TDC during speed control and in the calculation of the reconstructed reference speed (*ω_{rec}*) during torque control.

The specific method of calculating the reconstructed reference speed (ω_rec) by incorporating a "delayed speed (ω_delayed)" and utilizing a formula that effectively inverts the complete TDC transfer function, inclusive of its delayed component, ensures a more accurate and comprehensive reconstruction. This accuracy is particularly relevant when the duration of the torque control mode extends beyond the characteristic TDC delay time (*τ*), a scenario where simpler reconstruction methods that neglect the delayed feedback component of the TDC would become inexact. By accounting for *ω_{delayed},* the calculated *ω_{rec}* more faithfully represents the true input that the TDC would have required to produce the observed actuator speed (*ωₑₛₜ*) under all conditions of torque control duration.

This enhanced accuracy in determining *ω_{rec}* directly translates to a more precise initialization of the Time Delay Control (TDC) strategy upon transitioning to speed control mode. A more accurately determined *ω_{rec}* means that the internal states of the TDC, including its delay buffers which would be influenced by *ω_{delayed}* (as *ω_{delayed}* is derived from past values of *ω_{rec}*), are set to values that precisely correspond to the system's ongoing dynamic behavior. This precision minimizes any potential discrepancies at the point of transition, further contributing to the smoothness of the mode change and the effectiveness of the immediate oscillation damping.

Employing a formula that explicitly inverts the TDC transfer function, such as the example ${ω}_{rec} = \frac{{ω}_{est} - \left(α∗{ω}_{delayed}\right)}{\left(1-α\right)}$ (where *α* is a TDC ratio or dampening factor), provides a robust and mathematically sound basis for the reconstruction. This systematic approach allows the method to be reliably applied to systems with well-defined TDC parameters, ensuring consistent performance in reconstructing the reference speed regardless of the specific trajectory or history of the actuator speed during torque control. This contributes to the overall reliability and predictability of the control system's behavior during and after mode transitions.

The method may further comprise, during torque control mode, storing the reconstructed reference speed (*ω_{rec}*) and/or the delayed speed (*ω_{delayed}*) in a buffer.

The term "buffer" in this context refers to a memory storage element or a logical data structure used to temporarily hold a sequence of values of the reconstructed reference speed (*ω_{rec}*) and/or the delayed speed (*ω_{delayed}*) over a certain period. This buffer effectively maintains a history of these calculated speeds, which can be accessed or utilized by the control system, particularly during the transition between control modes or for the continuous operation of the Time Delay Control (TDC) logic.

Storing the reconstructed reference speed (*ω_{rec}*) and/or the delayed speed (*ω_{delayed}*) in a buffer during torque control mode provides a readily accessible history of these values. This historical data is particularly pertinent for the continuous and correct operation of the Time Delay Control (TDC) logic, which inherently relies on past input values to generate its delayed signal component. By maintaining this information in a buffer, the system ensures that when the transition to speed control mode occurs, the TDC can be initialized or can continue its operation seamlessly, using an authentic and uninterrupted stream of data reflecting the system's recent state as if the TDC had been notionally active.

The availability of buffered *ω_{rec}* and/or *ω_{delayed}* values is useful in enabling the TDC to effectively damp oscillations, including those that may have developed or persisted during the torque control phase or those that might be induced by the transition itself. The buffer effectively provides the "memory" for the TDC's feedforward compensation. Without such maintained continuity, the TDC may lack the historical input to accurately compute its delayed component at the instant of switching, potentially leading to a suboptimal or even destabilizing response immediately after the transition.

Furthermore, the use of a buffer to store these speeds ensures that the information required for a smooth and stable transition is preserved even if the calculation of *ω_{rec}* and *ω_{delayed}* is intermittent or if there are slight processing delays. The buffer acts as a synchronizing element, ensuring that the TDC strategy has access to a consistent set of data reflecting the system's behavior leading up to the control mode switch. This contributes to the robustness and reliability of the transition process by ensuring the availability of a consistent data history for TDC initialization. It is important to note that the buffer serves to store and time-delay the input data, including any potential noise or intermittency present in said data, without performing an intrinsic filtering function; such noise or intermittency would thus be reproduced at the buffer's output.

Upon transitioning to speed control mode, the initial reference speed input to the TDC strategy may be derived from values stored in said buffer, said values corresponding to a state of the system within a predefined time interval prior to the transition, preferably related to a natural oscillation period of the system.

The term "initial reference speed input to the TDC strategy" refers to the specific speed value or sequence of speed values that is first provided to the Time Delay Control (TDC) algorithm or functional block when the system transitions into, and begins operating under, speed control mode. This initial input sets the starting point for the TDC's operation in modifying the speed commands to damp oscillations.

The expression "state of the system" in this context refers to a collection of variables that describe the dynamic condition of the oscillating system at a particular instant or over a recent time interval. This typically includes, but is not limited to, the measured or estimated actuator speed (*ωₑₛₜ*), the calculated reconstructed reference speed (*ω_{rec}*), and the delayed speed (*w_{delayed}*), as well as potentially other dynamic variables like actuator position or stored elastic energy if relevant.

The term "natural oscillation period of the system" refers to the time duration of one complete cycle of the dominant inherent oscillation that the physical system exhibits when disturbed from its equilibrium, if left to oscillate freely or under minimal damping. This period is an intrinsic characteristic of the physical system, determined by its mass, stiffness, and other physical properties. For the TDC strategy, a delay (*τ*) related to half this natural oscillation period is often used.

Utilizing values stored in the buffer, which correspond to a state of the system within a predefined time interval prior to the transition, to derive the initial reference speed input for the Time Delay Control (TDC) strategy, ensures that the TDC's operation commences with a high degree of contextual awareness. The buffer acts as a repository of the system's recent dynamic history, as captured by variables like the reconstructed reference speed (*ω_{rec}*) and delayed speed (*ω_{delayed}*). By drawing upon this buffered information, the TDC is not initialized with an arbitrary or naive starting point, but rather with data that accurately reflects the system's motion and oscillatory tendencies leading up to the control mode switch. This continuity is useful for effective feedforward control.

Deriving the initial TDC input from a system state, particularly one related to the natural oscillation period of the system (e.g., data buffered over a duration corresponding to half the oscillation period, which is a typical TDC delay *τ*), directly enhances the TDC's ability to immediately and effectively damp residual oscillations. The TDC strategy fundamentally works by using delayed versions of the reference to cancel out oscillatory modes. If the initialization uses buffered data spanning this characteristic delay period, the TDC can immediately generate the correct compensatory delayed signals based on the actual recent behavior of the system (as notionally driven by *ω_{rec}*)*.* This avoids a "learning" or "settling" phase for the TDC and makes its oscillation damping effect more immediate and potent upon switching to speed control.

This approach of leveraging buffered historical data for TDC initialization contributes significantly to the seamlessness of the transition and the overall stability of the system. By ensuring the TDC starts with an input that is a logical continuation of the system's preceding state as interpreted through the lens of TDC requirements, the method avoids discontinuities or mismatches that could otherwise introduce new disturbances or fail to address existing ones. The system thereby benefits from a more robust and predictable response during the critical phase of control mode handover, leading to smoother operation and more reliable performance in managing the physical oscillations of the real-world system.

Initializing the TDC strategy using data stored in said buffer may comprise applying a compensation based on said stored data to damp residual oscillations present at the time of transition.

The expression "applying a compensation" in this context refers to the process of actively modifying the control signals or the internal state of the Time Delay Control (TDC) strategy in a way that is specifically designed to counteract or neutralize an undesirable effect, in this case, residual oscillations. This compensation is derived from, or informed by, specific data related to the system's behavior.

The term "stored data" refers to the information that has been previously recorded and maintained in the buffer. This data primarily consists of historical values of the reconstructed reference speed (*ω_{rec}* ) and/or the delayed speed (*ω_{delayed}*), which collectively represent the recent dynamic state of the system as interpreted for the TDC logic.

The phrase "damp residual oscillations" means to actively reduce the amplitude and persistence of any vibratory movements that remain in the physical system at the particular moment being considered. These "residual" oscillations could be remnants from previous control actions, disturbances, or oscillations inherent to the system's natural response.

The expression "at the time of transition" refers to the specific instant or very short period during which the control system switches from operating in the torque control mode to operating in the speed control mode, wherein the TDC strategy becomes the active mechanism for shaping the speed reference.

Initializing the Time Delay Control (TDC) strategy by specifically applying a compensation derived from the stored data in the buffer to damp residual oscillations present at the time of transition provides a targeted and effective mechanism for immediate stabilization. The stored data, representing the recent history of reconstructed and delayed speeds, effectively contains an imprint of any ongoing oscillatory behavior or stored elastic energy within the physical system. By using this data not just for continuity but to actively compute and apply a compensatory action through the TDC, the method directly addresses and mitigates these unwanted motions from the very onset of the speed control mode.

This active compensation, based on historical system behavior captured in the buffer, allows the TDC to perform more effectively than if it were merely initialized to a starting reference without explicit consideration of residual dynamics. The TDC's inherent feedforward nature, which relies on shaping the input based on its knowledge of the system's oscillatory period and damping, is significantly enhanced when its initial operation is primed with a compensatory signal derived from the actual recent state. This means the TDC doesn't just prevent future oscillations due to the new speed commands, but also actively works to cancel out oscillations already in progress within the real-world system.

The explicit act of applying compensation to damp residual oscillations using buffered data ensures a higher degree of system stability and smoothness immediately following the switch from torque control to speed control. This approach minimizes the period during which the system might exhibit undesirable vibrations while the TDC "catches up" or settles. Consequently, the physical system achieves a controlled and stable state more rapidly, which is beneficial for precision tasks, operator comfort, and reducing mechanical stress on the apparatus. This proactive damping, informed by the system's immediate past, distinguishes the method from simpler transition schemes.

The TDC transfer function may be substantially of the form *TDC*(*s*) = (1 *- α*) *+ α* * *e*^{-*sτ*}, where *α* is a TDC ratio and *τ* is a time delay.

Such Time Delay Control (TDC) transfer function provides a well-defined and mathematically tractable basis for the control strategy. This specific structure facilitates a straightforward implementation of the TDC and allows for a direct and robust calculation of the reconstructed reference speed (*ω_{rec}*) by inverting this function. The established nature of this transfer function form also aids in the systematic tuning of the TDC parameters (*α* and *τ*) based on the physical characteristics of the oscillating system, contributing to the method's overall effectiveness and applicability.

The transition is initiated in response to a command or a system condition.

The term "command" in this context refers to an explicit instruction or directive, typically originating from an external source such as a human operator (e.g., via a joystick, button, or control panel) or a higher-level supervisory control system (e.g., an automated sequence planner). This command signifies a deliberate intention to change the operational mode of the control system.

The term "system condition" refers to a specific state or set of circumstances detected or determined within the control system or the physical oscillating system itself, which automatically triggers the transition between control modes. This is distinct from an external command and is based on pre-defined logic or criteria related to the system's operational parameters or status.

Initiating the transition from torque control mode to speed control mode in response to either an explicit command or a predefined system condition provides significant operational flexibility and allows the control strategy to be highly adaptive to varying operational needs and circumstances. This dual triggering mechanism ensures that the switch between control modes can be invoked deliberately by an operator when desired, or automatically by the system when certain operational criteria are met, thereby optimizing performance across a wider range of scenarios than a fixed or solely manual transition scheme.

When the transition is initiated by a command, for example, when an operator moves a joystick to a neutral position after a dynamic maneuver performed in torque control, or presses a "hold speed" button, the system can seamlessly switch to TDC-enhanced speed control to precisely maintain the current speed or bring the system to a controlled stop without inducing oscillations. This empowers the operator with direct control over the system's behavior, allowing them to leverage the responsiveness of torque control for active tasks and the stability of speed control for holding or finishing tasks, with the inventive method ensuring the transition itself is smooth. For instance, a crane operator might use torque control for rapidly slewing the boom towards a target, and then issue a command to switch to speed control for precise, oscillation-damped final positioning or a gentle stop.

Alternatively, initiating the transition based on a system condition allows for automated optimization of the control strategy without requiring continuous operator intervention. For example, a system condition could be the actuator speed (*ωₑₛₜ*) reaching a certain predefined threshold during acceleration in torque control, at which point the system automatically transitions to speed control to maintain that target speed with high precision and damping. Another example could be the detection of a period of inactivity or a stable torque input, suggesting that the dynamic phase is over and a switch to a more stable speed control mode is appropriate. For instance, a material handling robot might accelerate a load under torque control for maximum initial thrust, and then, upon reaching for example 80% of its target cruising speed (a system condition), automatically switch to TDC-enhanced speed control for the remainder of the transit to ensure smooth travel and an oscillation-free stop at the destination. This automation enhances efficiency and consistency, especially in repetitive or complex tasks.

The ability to trigger the transition through these distinct mechanisms, ensures that the benefits of seamlessly combining torque and TDC-based speed control can be applied intelligently and effectively. This adaptability makes the control system more versatile and better suited to a wide array of applications involving real-world physical oscillating systems, where both operator-driven responsiveness and automated, stable operation are often required at different stages of an operational cycle.

The method may further comprise:
- transitioning back from the speed control mode to the torque control mode; and
- subsequently, for one or more further transitions to the speed control mode, again performing the steps of operating in torque control mode while calculating a reconstructed reference speed, transitioning to speed control mode, and initializing the TDC strategy using said reconstructed reference speed.

The capability to transition back from the speed control mode to the torque control mode, and subsequently re-engage the described process for further transitions from torque control to speed control, imparts a significant degree of operational cyclicity and sustained adaptability to the control system. This means the system is not limited to a single, one-way switch from torque to speed control, but can instead alternate between these modes multiple times as required by the operational task or operator intent. Each subsequent transition from torque control back to TDC-enhanced speed control benefits from the same seamless initialization process, involving the recalculation of the reconstructed reference speed (*ω_{rec}*) during the intervening torque control phase and its use to prime the TDC strategy.

This ability to perform multiple, smooth transitions in both directions (implicitly, as returning to torque control is standard, and explicitly for torque-to-speed) allows the physical oscillating system to repeatedly leverage the optimal characteristics of each control mode throughout complex operational sequences. For example, an operator of an articulated robotic arm might initially use torque control for a rapid, coarse positioning movement, then transition to TDC-enhanced speed control for a precise, oscillation-damped approach to an object. After interacting with the object (perhaps requiring torque control again for compliant force application), the operator might need another phase of rapid movement in torque control to a new area, followed once more by a smooth transition to speed control for fine adjustment. The claimed method ensures that each instance of switching from torque to speed control is managed effectively to prevent oscillation induction and maintain stability.

Furthermore, this iterative capability enhances the system's responsiveness to dynamically changing environments or task requirements. If, after operating in speed control mode, a situation arises that demands immediate and highly responsive action best provided by torque control (e.g., an unexpected obstacle requiring a quick evasive maneuver), the system can switch back. Subsequently, when conditions permit a return to precision or steady-state operation, the robust mechanism for transitioning back into TDC-enhanced speed control is available again, ensuring that this subsequent transition is also managed without performance degradation. This ensures that the full benefits of the core inventive method (seamless transition and oscillation damping) are not a one-time occurrence but are consistently available throughout the operational life and varied tasks performed by the real-world physical system.

The present document also concerns a control system for an oscillating system, the control system comprising a processor and a memory associated with said processor, the memory storing instructions that, when executed by the processor, configure the control system to implement the method according to any of the preceding claims.

The term "control system" as used herein refers to an assembly of components, typically including at least one processor and associated memory, along with necessary interfaces for receiving sensor inputs from and sending command outputs to a physical oscillating system. This control system is configured, through stored instructions, to execute a defined control logic or method, such as the method for controlling transitions between torque and speed control modes described in the preceding claims, in order to manage the behavior of said physical oscillating system.

The term "processor" refers to a logic circuitry that responds to and processes basic instructions to drive a particular computer or, more broadly, an electronic device. In the context of the control system, the processor is the central component responsible for executing the stored instructions that implement the control method, performing calculations (such as for the reconstructed reference speed), making decisions based on system state, and generating control signals for the actuators of the oscillating system. This may include microprocessors, microcontrollers, digital signal processors (DSPs), field-programmable gate arrays (FPGAs), or application-specific integrated circuits (ASICs).

The term "memory" refers to any physical device capable of storing data and instructions, either temporarily or permanently, for use by the processor. In the control system, the memory is associated with the processor and stores the instructions that, when executed, configure the processor to implement the control method. This can include various types of memory, such as Random Access Memory (RAM) for temporary data and program execution, Read-Only Memory (ROM) for firmware, flash memory, or other non-transitory computer-readable storage media.

The term "instructions" refers to a set of machine-readable commands or computer code, stored in the memory, that direct the processor to perform specific operations. In this context, these instructions embody the logic of the control method according to any of the preceding claims, including the steps of operating in torque control mode, calculating the reconstructed reference speed, transitioning between modes, and initializing the Time Delay Control (TDC) strategy.

The present document also concerns a computer program product comprising instructions which, when the program is executed by said control system, cause the control system to carry out the above-mentioned method.

The present document also concerns a non-transitory computer-readable storage medium comprising instructions which, when executed by said control system, cause the control system to carry out the above-mentioned method.

The term "non-transitory computer-readable storage medium" refers to any tangible physical storage device or apparatus that is capable of storing data, including computer-executable instructions, for a period of time, and which is not a mere transitory propagating signal per se. This medium allows a processor or a control system to read and access these stored instructions for execution. Examples of non-transitory computer-readable storage media include, but are not limited to, semiconductor-based memory devices such as Random Access Memory (RAM), Read-Only Memory (ROM), Electrically Erasable Programmable Read-Only Memory (EEPROM), and flash memory; magnetic storage media such as hard disk drives and floppy disks; and optical storage media such as Compact Discs (CD-ROM, CD-R, CD-RW) and Digital Versatile Discs (DVD).

### Brief description of the drawings

Other features, details and advantages will become apparent from the detailed description below, and from an analysis of the attached drawings, in which:
- Fig. 1 is a schematic diagram illustrating an exemplary physical oscillating system, such as a crane.
- Fig. 2 is a schematic block diagram illustrating steps of an embodiment of the method for controlling an oscillating system.
- Fig. 3 is a Bode diagram illustrating the frequency response characteristic of a Time Delay Control (TDC) strategy.
- Fig. 4 is a graphical representation of system behavior under a conventional torque control mode.
- Fig. 5 is a graphical representation of system behavior under a conventional speed control mode incorporating a TDC strategy.
- Fig. 6 is a schematic block diagram detailing an embodiment of the control logic for implementing the method.
- Fig. 7 is a graphical representation illustrating an exemplary operational sequence of the method, including a transition between control modes.
- Fig. 8 is a graphical representation illustrating system behavior when a torque reference is modified during torque control mode prior to transition.
- Fig. 9 is a graphical representation illustrating the capability of the method to handle multiple transitions between control modes.
- Fig. 10 is a schematic block diagram of an exemplary control system for implementing the described method.

### Detailed description of the drawings

The present invention will be better understood from the detailed description of exemplary embodiments provided herein below, when considered in conjunction with the appended drawings.

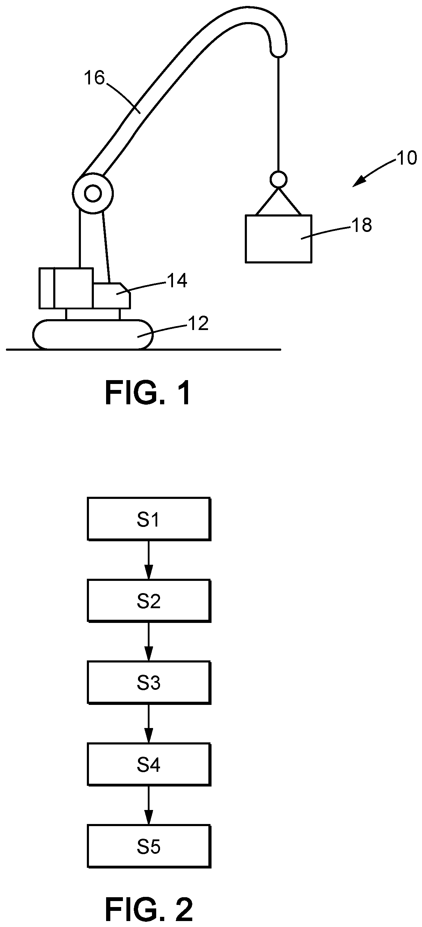

Referring now to the drawings, Fig. 1 schematically illustrates an exemplary physical oscillating system 10 to which the disclosed method and control system may be applied. In this illustrative embodiment, the oscillating system 10 is depicted as a crane. The crane 10 comprises a mobile or fixed base 12, which supports a rotatable body or turret 14. Extending from the rotatable body 14 is an elongated boom 16. Due to its length and material properties (e.g., steel), the boom 16 inherently possesses a degree of flexibility or elasticity. A load 18 is typically suspended from or near the distal end of the boom 16 via a cable or hoist mechanism.

When the crane 10 is operated, for instance, by rotating the body 14 to slew the boom 16, or by luffing the boom, the combination of the boom's elasticity and the inertia of the boom itself and the suspended load 18 can lead to undesirable oscillatory or vibratory movements of the boom tip and the load 18. These oscillations are a physical manifestation of the system's natural resonant frequencies being excited by control actions or external disturbances. Such oscillations can impede precise load positioning, reduce operational speed, increase mechanical stress on the crane structure, and affect operator comfort and safety.

While Fig. 1 depicts a crane, it is to be understood that the principles of the present invention are applicable to a wide variety of other physical oscillating systems, including but not limited to robotic arms with flexible joints or links, gantry systems, pendulum-like material handling systems, and other structures where inertia and elasticity give rise to vibrational modes. The challenge addressed by the present invention is to effectively control such physical oscillating systems 10, particularly when transitioning between different control modes, to minimize these detrimental oscillations.

Fig. 2 presents a schematic block diagram outlining the principal steps of an exemplary embodiment of the method for controlling an oscillating system, particularly for achieving a seamless transition between control modes.

The method commences at step S1, wherein the physical oscillating system is operated in a torque control mode. In this mode, the control system primarily commands the torque output of the system's actuator(s) to achieve desired dynamic responses.

During the operation in torque control mode, a sequence of preparatory actions is performed, continuously or intermittently. First, at step S2, a measured or estimated actuator speed (*ωₑₛₜ*) of the physical system is obtained. This *ωₑₛₜ* represents the actual current speed of the prime mover or relevant part of the oscillating system.

Following the acquisition of *ωₑₛₜ*, at step S3, a reconstructed reference speed (*w_{rec}*) is calculated. This calculation is based on the obtained measured or estimated actuator speed (*ωₑₛₜ*) and pre-determined Time Delay Control (TDC) parameters specific to the oscillating system (such as *α* and *τ*, as will be discussed further). The reconstructed reference speed *ω_{rec}* is determined such that if this *ω_{rec}* had been applied as an input to the system's TDC transfer function, the resulting output would substantially correspond to the currently observed *ωₑₛₜ.* This step effectively derives the TDC input that would match the system's current speed while under torque control.

Subsequently, when a transition is required, either by an operator command or a predefined system condition, the method proceeds to step S4, wherein the control system transitions from the torque control mode to the speed control mode. In this speed control mode, the TDC strategy is employed to shape the speed reference to mitigate oscillations.

Upon said transitioning into speed control mode, at step S5, the TDC strategy is initialized. This initialization is performed by using the calculated reconstructed reference speed (*ω_{rec}*) from step S3, or a value derived therefrom (for example, to populate TDC delay buffers or set an initial state), as the initial reference speed input to the TDC strategy. This specific initialization ensures that the TDC commences its operation with a context that is consistent with the system's immediate past dynamic state, thereby enabling a seamless transition between the control modes and/or facilitating the damping of oscillations in the physical system.

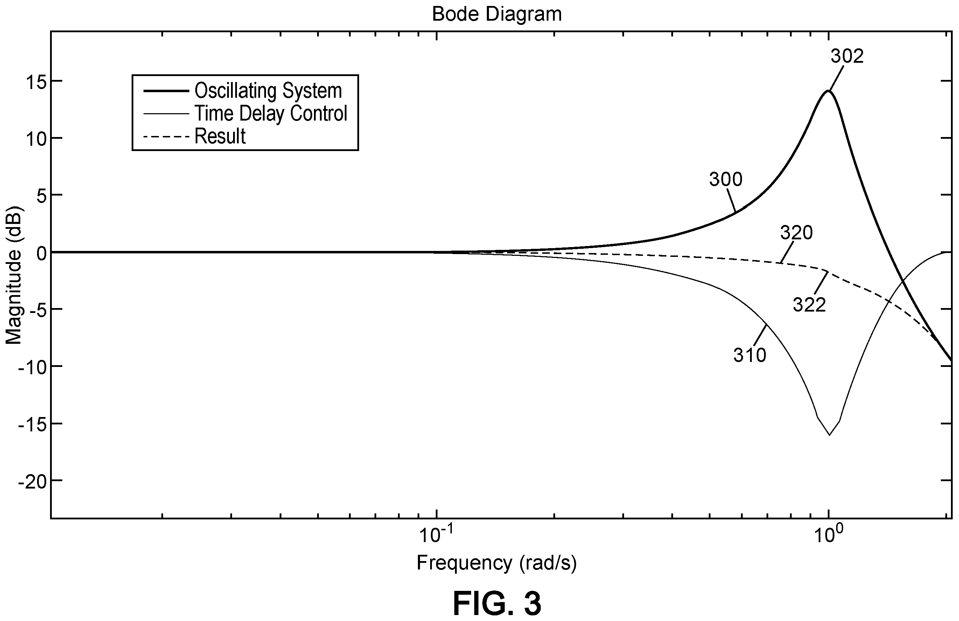

Fig. 3 illustrates a Bode diagram representing the frequency response characteristics pertinent to the application of a Time Delay Control (TDC) strategy to an oscillating system. The horizontal axis represents frequency in radians per second (rad/s) on a logarithmic scale, and the vertical axis represents magnitude in decibels (dB).

The diagram displays a first curve, labeled "Oscillating System" 300, which depicts the typical frequency response of an uncompensated physical oscillating system. This curve 300 is characterized by a significant resonant peak 302 at a particular frequency, indicating the natural frequency at which the system tends to oscillate with a large amplitude when excited. This resonant peak 302 is a primary contributor to the undesirable vibrations encountered during the operation of such systems.

Also shown is a second curve, labeled "Time Delay Control" 310. This curve represents the transfer function of the TDC strategy itself (e.g., TDC(s) = (1 - α) + α * e^(-sτ)). The TDC strategy is designed to counteract the resonant behavior of the oscillating system.

A third curve, labeled "Result" 320, illustrates the combined frequency response of the oscillating system when the TDC strategy is applied. It can be observed that the "Result" curve 320 exhibits a significant attenuation in magnitude at or near the resonant frequency previously identified by the peak 302 of the "Oscillating System" curve 300. This attenuation demonstrates the fundamental principle of the TDC strategy: to reduce the system's gain at its natural oscillation frequency, thereby damping or eliminating oscillations when operating under speed control with the TDC active. The specific shape and depth of this attenuation are determined by the TDC parameters, such as *α* and *τ*, which are tuned to the characteristics of the physical oscillating system.

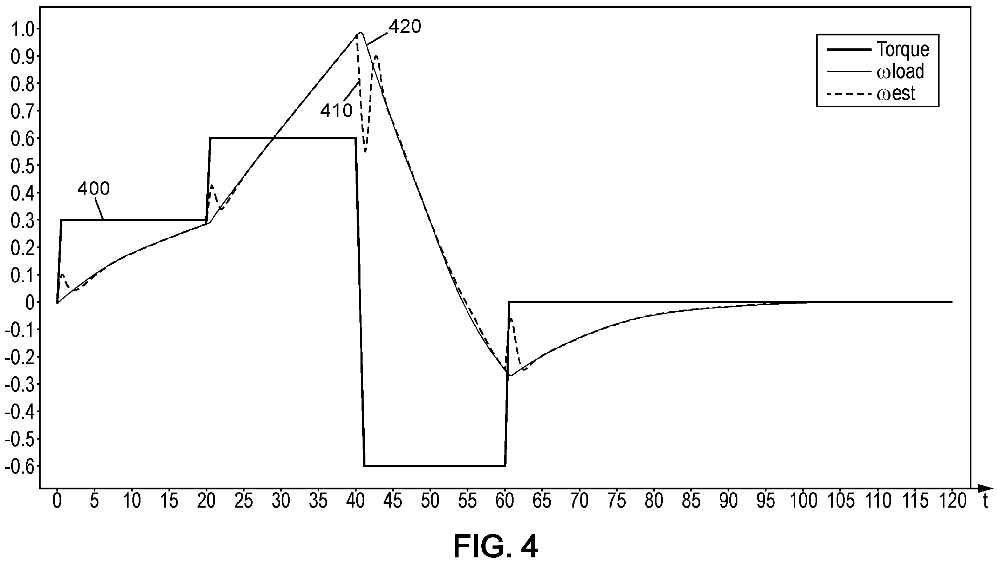

Fig. 4 provides a graphical illustration of the typical dynamic behavior of an oscillating system when operated exclusively under a conventional torque control mode. The horizontal axis represents time *t*, and the vertical axis represents various signal magnitudes, such as torque and speed.

The plot displays a first signal trace, representing the commanded torque ("Torque") 400 applied to the system's actuator. This torque 400 is shown with step-like changes, indicating periods of acceleration, constant torque application, and deceleration (e.g., by applying a negative torque or zero torque).

A second signal trace, labeled *"wₑₛₜ"* 410, represents the measured or estimated speed of the actuator. A third signal trace, labeled "*ω_{load}*" 420, represents the speed of the oscillating part of the system, such as the load itself.

It can be observed from Fig. 4 that when a torque 400 is applied or changed, the actuator speed *ωₑₛₜ* 410 and the load speed *ω_{load}* 420 respond accordingly. Torque control can offer a rapid initial response. However, the speeds *ωₑₛₜ* 410 and *ω_{load}* 420 are not directly regulated to a specific setpoint and their exact values depend on the applied torque 400 and the system's inherent dynamics, including its load. Furthermore, differences and oscillations can be seen between the actuator speed *ωₑₛₜ* 410 and the load speed *ω_{load}* 420, particularly during and after changes in the applied torque. For example, when the torque 400 is significantly reduced or set to zero (e.g., around t=40 and t=60 in the example), the system may exhibit residual oscillations as stored elastic energy is released, and the deceleration to a complete stop can be prolonged if active braking torque is not precisely managed. This figure illustrates the trade-offs associated with pure torque control: responsiveness at the expense of precise speed control and potential for residual oscillations.

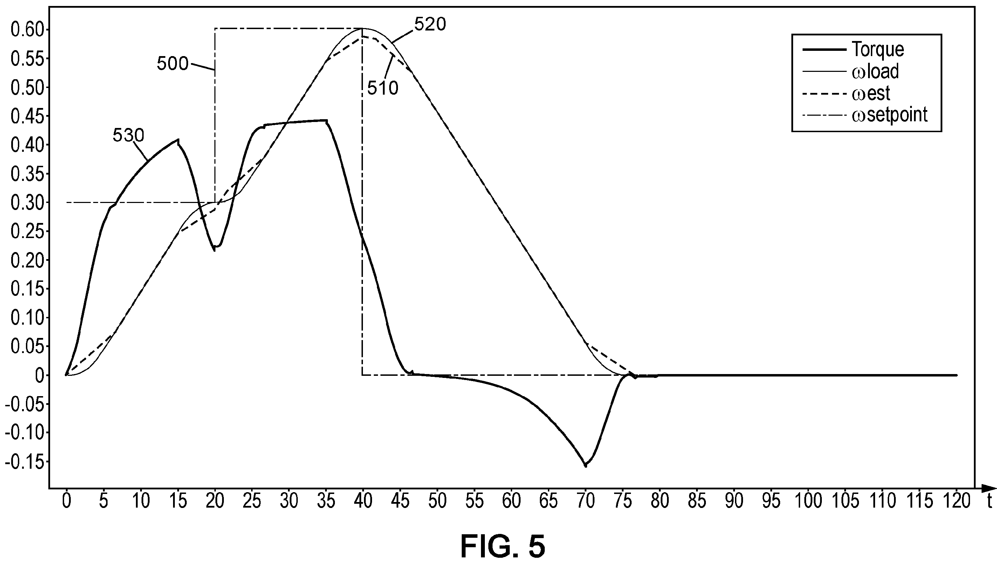

Fig. 5 is a graphical representation illustrating the typical dynamic behavior of an oscillating system when operated under a conventional speed control mode that incorporates a Time Delay Control (TDC) strategy. As in the previous figure, the horizontal axis represents time *t*, and the vertical axis represents various signal magnitudes.

The plot displays a speed setpoint, labeled "*ωₛₑₜₚₒᵢₙₜ*" 500, which defines the desired speed trajectory for the system. This *ωₛₑₜₚₒᵢₙₜ* 500 is shown with step changes. Also depicted are the resulting actuator speed, *"ωₑₛₜ"* 510, the speed of the oscillating load, *"w_{load}"* 520, and the torque, "Torque" 530, applied by the actuator as determined by the speed controller.

It can be observed from Fig. 5 that the actuator speed *ωₑₛₜ* 510 and the load speed *ω_{load}* 520 generally follow the speed setpoint *wₛₑₜₚₒᵢₙₜ* 500. The TDC strategy, applied to the *ωₛₑₜₚₒᵢₙₜ* 500 before it is used by the speed loop, aims to shape the effective speed reference to minimize oscillations. As a result, the speeds *ωₑₛₜ* 510 and *ω_{load}* 520 tend to converge to the setpoint values with reduced or eliminated residual oscillations compared to an uncompensated speed control or pure torque control. This demonstrates the primary benefit of using TDC in speed control: achieving a precise target speed while maintaining system stability.

However, Fig. 5 also illustrates a characteristic of such TDC-enhanced speed control where the initial dynamic response may be perceived as less direct or immediate compared to pure torque control. The shaping of the reference by the TDC, while effective for damping, can result in a smoother, sometimes slower, initial acceleration of *ωₑₛₜ* 510 and *w_{load}* 520. The torque 530 profile is generated by the underlying speed controller to achieve the TDC-modified speed trajectory and counteract disturbances. This figure highlights the trade-off in conventional TDC-based speed control: improved stability and precision at the potential cost of initial responsiveness.

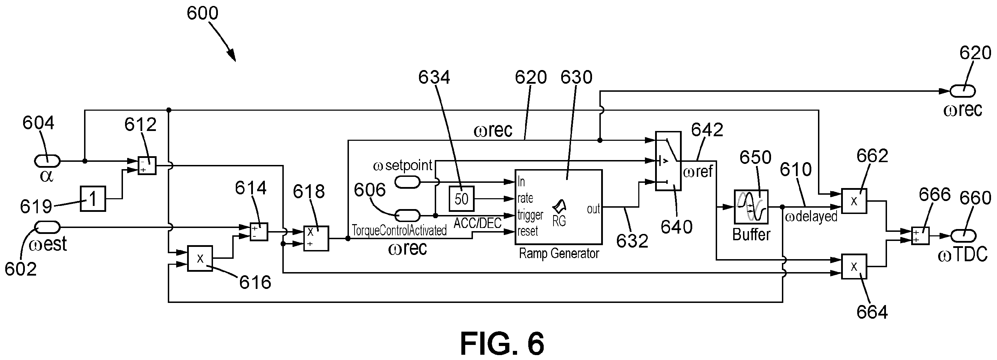

Fig. 6 provides a detailed schematic block diagram illustrating an exemplary embodiment of the control logic 600 for implementing the core aspects of the present method, particularly the calculation of the reconstructed reference speed (*ω_{rec}*) and its use in the Time Delay Control (TDC) strategy during transitions.

The control logic 600 receives several inputs. An input labeled *"ωₑₛₜ" 602* represents the measured or estimated actuator speed. Another input "*α*" 604 represents the TDC ratio or damping factor, a key TDC parameter. A signal "TorqueControlActivated" 606 indicates whether the system is currently in torque control mode (e.g., value of 1) or speed control mode (e.g., value of 0). An input "*ωₛₑₜₚₒᵢₙₜ*" 608 represents the desired speed setpoint when in speed control mode.

During torque control mode (when "TorqueControlActivated" 606 is active), the logic focuses on calculating *ω_{rec}.* The actuator speed *ωₑₛₜ* 602 is processed along with the TDC parameter *α* 604 and a signal "*ω_{delayed}*" 610 (representing *ω_{rec}* subjected to a time delay) through a series of arithmetic blocks (subtractors 612, 614 and multipliers 616, 618, and a constant block "1" 619) to compute the reconstructed reference speed "*ω_{rec}*" 620. This calculation effectively inverts the TDC transfer function, for example, implementing a formula such as ${ω}_{rec} = \frac{{ω}_{est} - \left(α∗{ω}_{delayed}\right)}{\left(1-α\right)}$*.* The calculated *ω_{rec}* 620 is outputted and also fed back.

The control logic includes a "Ramp Generator" (RG) block 630. When the system is in torque control mode ("TorqueControlActivated" 606 is active), the "reset" input of the Ramp Generator 630 is fed with the continuously calculated *ω_{rec}* 620. This effectively primes the Ramp Generator. When the system transitions to speed control mode ("TorqueControlActivated" 606 becomes inactive), this signal acts as a trigger, and the Ramp Generator 630 begins to generate a speed reference profile "out" 632, starting from the last value of *ω_{rec}* and ramping towards the *ωₛₑₜₚₒᵢₙₜ* 608 at a specified "rate" 634 (e.g., "50" in the diagram) with acceleration/deceleration characteristic "ACC/DEC".

A switch block 640 selects the appropriate speed reference "*ω_{ref}*" 642 to be fed into the TDC processing path. During torque control, *ω_{ref}* 642 may be effectively *ω_{rec}* 620 (or an equivalent maintaining continuity). During speed control, *ω_{ref}* 642 is the output "out" 632 from the Ramp Generator 630.

This selected *ω_{ref}* 642 is then passed through a "Buffer" block 650, which implements a time delay (*τ*, another TDC parameter not explicitly shown but inherent to the buffer's function in a TDC context) to produce the delayed speed "*ω_{delayed}*" 610. The *ω_{delayed}* 610 is used, as previously mentioned, in the calculation of *ω_{rec}* 620*.*

Finally, the *ω_{ref}* 642 and the *ω_{delayed}* 610 are combined according to the TDC formula (e.g., (1 *- α*) * *ω_{ref} + a * ω_{delayed}*) within blocks comprising multipliers 662, 664 and summer 666. The output "*ωTDC*" 660 is the TDC-modified speed reference that is ultimately sent to the low-level speed controller of the actuator when in speed control mode. The output *ω_{rec}* 620 may also be used for monitoring or other purposes.

This interconnected logic ensures that *ω_{rec}* is continuously updated during torque control based on the actual system speed and the TDC's characteristics, and that this *ω_{rec}* is then seamlessly used to initialize the speed reference (via the Ramp Generator and switch) when transitioning to speed control, providing the TDC with consistent historical context via the buffer producing *ω_{delayed}.*

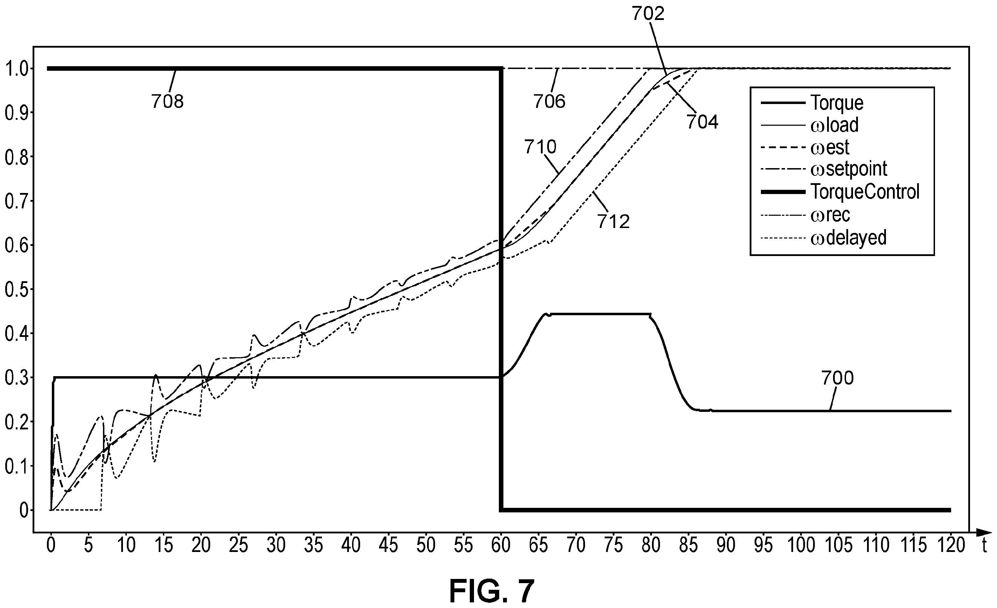

Fig. 7 is a graphical representation illustrating an exemplary operational sequence of the present method, showcasing the behavior of various system signals over time during torque control, transition, and subsequent speed control. The horizontal axis represents time *t*, and the vertical axis represents the magnitude of different signals.

The plot includes a trace for the applied torque ("Torque") 700, the speed of the oscillating load "*ω_{load}*" 702, the measured or estimated actuator speed "*ωₑₛₜ*" 704, and a speed setpoint "*ωₛₑₜₚₒᵢₙₜ*" 706 which becomes active during speed control mode. A mode indicator signal, "TorqueControl" 708, is also shown, where a high state (e.g., 1) indicates torque control mode is active, and a low state (e.g., 0) indicates speed control mode is active. The plot also displays the calculated reconstructed reference speed "*ω_{rec}*" 710 and the corresponding delayed speed "*w_{delayed}*" 712.

In the initial phase of the depicted sequence (e.g., from *t* = 0 until approximately *t* = 60), the "TorqueControl" signal 708 is high, indicating the system is operating in torque control mode. During this period, a certain torque 700 is applied, and the actuator speed *ωₑₛₜ* 704 responds accordingly. Concurrently, the reconstructed reference speed *ω_{rec}* 710 is continuously or intermittently calculated based on the evolving *ωₑₛₜ* 704 and the TDC parameters. The delayed speed *ω_{delay}* 712, representing *ω_{rec}* 710 subjected to a time delay *τ*, is also calculated and evolves. It can be observed that *ω_{rec}* 710 and *ω_{delay}* 712 generally track or lead the actuator speed *ωₑₛₜ* 704, with some oscillatory components that reflect the system's dynamics and the TDC inversion process. The progressive damping of oscillations in *ω_{rec}* 710 and *ω_{delay}* 712, if present and if α is appropriately chosen to reflect system damping, can also be observed during this phase, replicating the natural reduction in oscillation intensity.

At a specific time (e.g., around *t* = 60), the "TorqueControl" signal 708 transitions to a low state, initiating the switch from torque control mode to speed control mode. At this point, the TDC strategy is initialized using the values of *ω_{rec}* 710 and/or *ω_{delay}* 712 (or values derived therefrom, such as the state of the buffer producing *ω_{delay}* 712) immediately preceding the transition. The speed setpoint *wₛₑₜₚₒᵢₙₜ* 706 then dictates the desired speed trajectory. As shown, the actuator speed *ωₑₛₜ* 704 smoothly follows the *wₛₑₜₚₒᵢₙₜ* 706 towards the target speed, and the load speed *ω_{load}* 702 also converges without significant induced oscillations. Any residual oscillations present at the time of transition are effectively damped by the correctly initialized TDC. The torque 700 profile after *t* = 60 is now determined by the speed controller to achieve the TDC-modified speed reference.

This figure demonstrates the seamless nature of the transition achieved by the method, where the preparatory calculations during torque control enable a smooth and stable handover to TDC-enhanced speed control, effectively managing system oscillations.

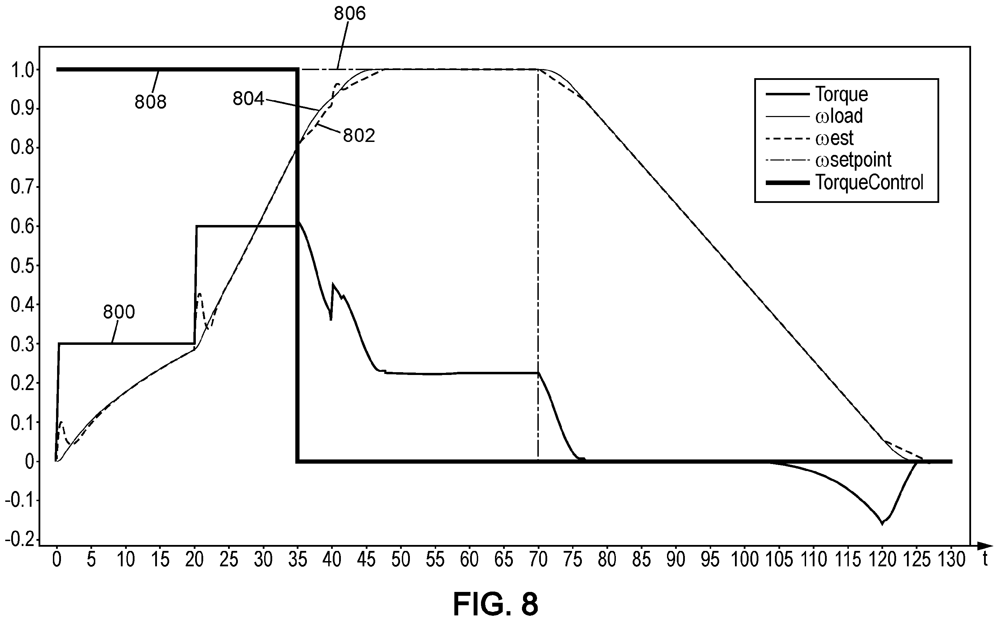

Fig. 8 is a graphical representation that further illustrates the operational flexibility of the present method, specifically showing how the torque reference can be actively modified during the torque control phase before a subsequent transition to speed control mode. The axes and general signal conventions are similar to previous time-domain plots.

The plot displays a torque reference signal ("Torque") 800, an actuator speed "*ωₑₛₜ* " 802, a load speed " *ω_{load}*" 804, a speed setpoint " *ωₛₑₜₚₒᵢₙₜ* " 806, and a "TorqueControl" mode indicator 808.

In this scenario, during the initial phase where the "TorqueControl" signal 808 is active (e.g., from *t =* 0 until approximately *t* = 35), the commanded torque 800 is not constant but undergoes several changes. For example, it starts at one level, then steps up to a higher level (around *t* = 20), and then steps down to an intermediate level (around *t =* 35). Throughout these variations in applied torque 800, the method continuously calculates the reconstructed reference speed (*ω_{rec}*, not explicitly plotted in this particular figure but its calculation is ongoing as per the method). The actuator speed *ωₑₛₜ* 802 and load speed *ω_{load}* 804 respond dynamically to these torque changes.

When the transition to speed control mode is initiated (e.g., "TorqueControl" 808 becomes inactive around *t* = 35), the Time Delay Control (TDC) strategy is initialized based on the reconstructed reference speed that has been calculated up to that point, reflecting the complex history of torque application and the resulting system speed. Subsequently, the actuator speed *ωₑₛₜ* 802 follows the speed setpoint *ωₛₑₜₚₒᵢₙₜ* 806, which in this example involves reaching a target speed and then decelerating to a stop.

Fig. 8 demonstrates that the preparatory calculations for *ω_{rec}* are robust to dynamic changes in the torque command itself during the torque control phase. The system is not restricted to a constant torque application prior to transition; rather, it can undergo active torque-controlled maneuvers. The method ensures that, regardless of these preceding torque variations, the transition to TDC-enhanced speed control remains seamless and stable, with effective oscillation management. This highlights the adaptability of the method to more complex and dynamic operational profiles common in real-world applications of physical oscillating systems.

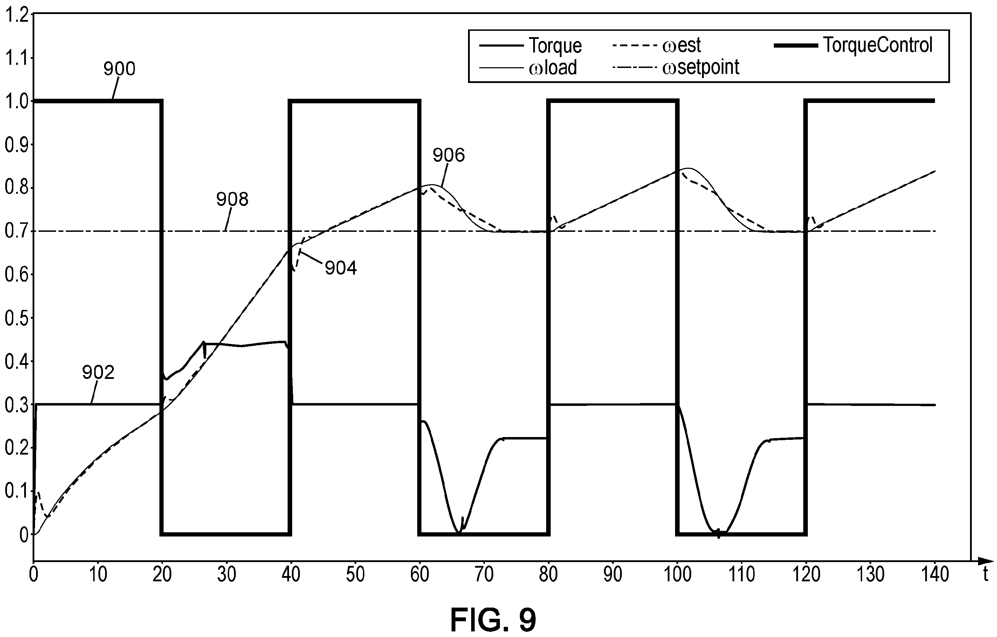

Fig. 9 is a graphical representation demonstrating the capability of the present method to effectively manage multiple, sequential transitions between torque control mode and TDC-enhanced speed control mode. The axes and general signal conventions are consistent with the previous time-domain plots.

The plot features a "TorqueControl" mode indicator signal 900, which alternates between a high state (torque control active) and a low state (speed control active) multiple times throughout the depicted sequence. Also shown are the applied torque ("Torque") 902, the actuator speed " *ωₑₛₜ* " 904, the load speed " *ω_{load}*" 906, and a speed setpoint ("ω_setpoint") 908 that is targeted during periods of speed control.

During each interval where the "TorqueControl" signal 900 is high (e.g., *t* = 0 - 20, *t* = 40 - 60, *t* = 80 - 100, *t* = 120 - 140), the system operates in torque control mode, with a specific torque 902 being applied. In these phases, the reconstructed reference speed (*ω_{rec}*, not explicitly plotted but understood to be calculated) is continuously determined based on the actuator speed *ωₑₛₜ* 904.

Each time the "TorqueControl" signal 900 transitions from high to low (e.g., at *t* = 20, *t* = 60, *t =* 100), the system switches from torque control to speed control. At these transition points, the Time Delay Control (TDC) strategy is initialized using the reconstructed reference speed calculated during the immediately preceding torque control phase. Subsequently, the actuator speed *ωₑₛₜ* 904 is regulated to follow the speed setpoint *ωₛₑₜₚₒᵢₙₜ* 908, with oscillations being damped by the TDC. For example, after the transition at *t* = 20, *ωₑₛₜ* 904 smoothly accelerates towards *ωₛₑₜₚₒᵢₙₜ* 908. Similar smooth transitions and stable speed regulation phases are observed after the transitions at *t* = 60 and *t =* 100, where the system might be commanded to maintain a speed or decelerate.

The system can also transition back from speed control to torque control (when "TorqueControl" 900 goes from low to high, e.g., at *t* = 40, *t* = 80, *t* = 120). During these subsequent torque control phases, the process of calculating *ω_{rec}* resumes, preparing for the next potential switch to speed control.

Fig. 9 clearly illustrates that the method is not limited to a single transition but can robustly handle repeated cycling between the two control modes. Each transition from torque control to speed control benefits from the same seamless initialization mechanism, ensuring consistent performance and stability throughout complex operational sequences that may require alternating between responsive torque control and precise, oscillation-damped speed control for the physical oscillating system.

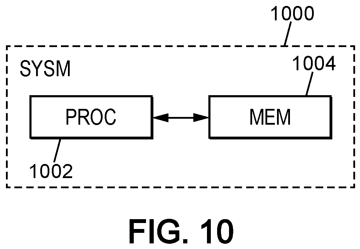

Fig. 10 is a schematic block diagram illustrating an exemplary embodiment of a control system 1000 suitable for implementing the method for controlling a physical oscillating system according to the present disclosure.

The control system 1000, designated by the encompassing block "SYSM," comprises at least one processor ("PROC") 1002 and a memory ("MEM") 1004 communicatively coupled to the processor 1002. The processor 1002 may be any suitable logic circuitry, such as a microprocessor, microcontroller, digital signal processor (DSP), field-programmable gate array (FPGA), or an application-specific integrated circuit (ASIC), capable of executing instructions. The memory 1004 may comprise any suitable type of non-transitory computer-readable storage medium, such as Random Access Memory (RAM), Read-Only Memory (ROM), flash memory, or other storage devices, capable of storing data and machine-readable instructions.

The memory 1004 stores a set of instructions which, when executed by the processor 1002, configure the control system 1000 to perform the steps of the method as described in the preceding figures. This includes, but is not limited to, instructions for: operating the physical oscillating system (not explicitly shown but controlled by SYSM 1000) in a torque control mode; obtaining measured or estimated actuator speed (*ωₑₛₜ*) from sensors or estimators associated with the physical oscillating system; calculating the reconstructed reference speed (*ω_{rec}*) based on said *ωₑₛₜ* and TDC parameters (which may also be stored in memory 1004 or configured in the processor 1002); managing the transition from torque control mode to speed control mode in response to commands or system conditions; and initializing the Time Delay Control (TDC) strategy using said *ω_{rec}* or a value derived therefrom (e.g., by managing a buffer, which can be implemented within memory 1004, for storing *ω_{rec}* and/or *ω_{delayed}*).

The control system 1000 may typically also include interfaces (not explicitly shown) for receiving inputs (e.g., sensor data from the physical oscillating system, operator commands) and for sending control outputs (e.g., torque commands or TDC-modified speed references) to the actuator(s) of the physical oscillating system. The interaction depicted between PROC 1002 and MEM 1004 by a double-headed arrow signifies the flow of instructions and data necessary for the processor to execute the control logic embodied by the method.

## Claims

1. A method for controlling an oscillating system, the system being operable in a torque control mode and a speed control mode, wherein the speed control mode utilizes a Time Delay Control or TDC strategy **characterized by** a TDC transfer function and TDC parameters, the method comprising the steps of:
- operating (S1) the system in the torque control mode;
- during operation in the torque control mode, continuously or intermittently:
-- obtaining (S2) a measured or estimated actuator speed (*ωₑₛₜ*) of the system;
-- calculating (S3) a reconstructed reference speed (*ω_{rec}*) based on said measured or estimated actuator speed (*ωₑₛₜ*) and said TDC parameters, wherein the reconstructed reference speed is determined such that if the reconstructed reference speed (*ω_{rec}*) were applied as an input to the TDC transfer function, the output would substantially correspond to the measured or estimated actuator speed (*ωₑₛₜ*);
-- transitioning (S4) from the torque control mode to the speed control mode; and
-- upon said transitioning, initializing (S5) the TDC strategy in the speed control mode by using said calculated reconstructed reference speed (*ω_{rec}*), or a value derived therefrom, as an initial reference speed input to the TDC strategy, thereby enabling a seamless transition between control modes and/or damping oscillations in the system.

2. The method according to the preceding claim, wherein the step of calculating the reconstructed reference speed (*ω_{rec}*) further comprises:
calculating a delayed speed (*ω_{delayed}*) representing the reconstructed reference speed (*ω_{rec}*) subjected to a delay, and determining the reconstructed reference speed (*ω_{rec}*) according to a formula that inverts the TDC transfer function, for example as ${ω}_{rec} = \frac{{ω}_{est} - \left(α∗{ω}_{delayed}\right)}{\left(1-α\right)}$ where *α* is a TDC ratio or dampening factor.

3. The method according to the preceding claim, further comprising, during torque control mode, storing the reconstructed reference speed (*ω_{rec}*) and/or the delayed speed (*ω_{delayed}*) in a buffer.

4. The method according to the preceding claim, wherein upon transitioning to speed control mode, the initial reference speed input to the TDC strategy is derived from values stored in said buffer, said values corresponding to a state of the system within a predefined time interval prior to the transition, preferably related to a natural oscillation period of the system.

5. The method according to the preceding claim, wherein initializing the TDC strategy using data stored in said buffer comprises applying a compensation based on said stored data to damp residual oscillations present at the time of transition.

6. The method according to any of the preceding claims, wherein the TDC transfer function is substantially of the form *TDC*(*s*) = (1 *- α*) *+ α* _{*} *e*^{-*sτ*}, where *α* is a TDC ratio and *τ* is a time delay.

7. The method according to any of the preceding claims, wherein the transition is initiated in response to a command or a system condition.

8. The method according to any of the preceding claims, further comprising:
- transitioning back from the speed control mode to the torque control mode; and
- subsequently, for one or more further transitions to the speed control mode, again performing the steps of operating in torque control mode while calculating a reconstructed reference speed, transitioning to speed control mode, and initializing the TDC strategy using said reconstructed reference speed.

9. A control system (1000) for an oscillating system (10), the control system comprising a processor (1002) and a memory (1004) associated with said processor, the memory storing instructions that, when executed by the processor, configure the control system to implement the method according to any of the preceding claims.

10. A computer program product comprising instructions which, when the program is executed by a control system according to the preceding claim, cause the control system to carry out the method of any one of claims 1 to 8.

11. A non-transitory computer-readable storage medium comprising instructions which, when executed by a control system according to claim 9, cause the control system to carry out the method of any one of claims 1 to 8.
